# EUROPEAN PATENT SPECIFICATION

(11) **EP 4 382 217 B1**
(45) Date of publication and mention of the grant of the patent: **04.12.2024**
(21) Application number: 22211670.9
(22) Date of filing: 06.12.2022
(51) Int. Cl.: B08B 3/02, B08B 5/02, B08B 5/04, G02C 13/00, B29D 11/00

(54) **CLEANING DEVICE AND METHOD FOR CLEANING SUBSTRATES MOUNTED ON A CALOTTE-SHAPED SUBSTRATE HOLDER**
REINIGUNGSVORRICHTUNG UND VERFAHREN ZUM REINIGEN VON AUF EINEM KALOTTENFÖRMIGEN SUBSTRATHALTER GELAGERTEN SUBSTRATEN
DISPOSITIF DE NETTOYAGE ET PROCÉDÉ DE NETTOYAGE DE SUBSTRATS MONTÉS SUR UN SUPPORT DE SUBSTRAT EN FORME DE CARTOUCHE

(43) Date of publication of application: 12.06.2024
(73) Proprietor: Carl Zeiss Vision International GmbH, 73430 Aalen (DE)
(72) Inventor: SCHAMBECK, Andreas, 73431 Aalen (DE); KOENEN, Timo, 73566 Bartholomä (DE); THOMAS, Stefan, 73430 Aalen (DE); KOEPPEL, Julia, 73479 Ellwangen (DE); BERGER, Benedikt, 73489 Dankoltsweiler (DE)
(74) Representative: Tautz & Schuhmacher

(56) References cited:
- EP-A1- 3 479 912
- WO-A1-2022/012955
- CN-A- 104 289 474
- JP-A- 2003 019 467
- DATABASE WPI Week 200347, Derwent World Patents Index; AN 2003-496887, XP002809376

## Description

Provided are embodiments of a cleaning device adapted for cleaning substrates mounted on a calotte-shaped substrate holder, a system for cleaning and coating substrates, and a method for cleaning multiple substrates mounted on a calotte-shaped substrate holder. The embodiments are, thus, related to processes for cleaning and coating substrates and optionally substrates for spectacle lenses.

Some substrates, in particular optical substrates, such as for instance spectacle lenses, are often subject to a coating process during their manufacturing process. In some cases, for instance, an anti-reflection coating may be applied to substrates. For the coating process, the substrates may be mounted on a calotte-shaped substrate holder, which is then inserted into a coating device to arrange the substrates at a predetermined position and in a predetermined orientation with respect to a particle source in the coating device. Examples for a coating device and a calotte-shaped substrate holder are described for instance in WO 2022/012955 A1 and WO 2004/108977 A2.

Prior to the actual coating process the substrates may require a cleaning treatment to remove possible dust and other contaminants present on the substrates mounted at the calotte-shaped substrate holder. Conventional devices for cleaning ophthalmic components are described in US2003041883A1, US6783603B2, US2013117963A1, US9085017B2, US2011258807A1, CN204148193U, and CN208866076U. These devices, however, are not suitable for cleaning substrate mounted on a calotte-shaped substrate holder. Therefore, the cleaning process is conventionally carried out in a manual process including removing the substrates one after another from their respective mounting slots on the substrate holder by hand, applying a cleaning process to the substrates, and replacing the substrates by hand at their original mounting slots, which is considered as closest prior art.

This requires a significant time effort for the cleaning process and bears a significant risk of swapping different substrates by unintentionally replacing them on a different mounting slot as the original mounting slot.

JP 2003 019467 A describes a cleaning apparatus according to the preamble of claim 1, with a cleaning nozzle and a sucking nozzle.

EP 3 479 912 A1 describes a cleaning station for an optical element with a cleaning nozzle and a drying nozzle.

It is thus desirable to provide a method and a device overcoming the disadvantages of the conventional cleaning process. Hence, it is the objective technical problem to provide a method and a device for cleaning the substrates requiring a lower time effort and bearing a lower risk of swapping the substrates.

This problem is solved by a cleaning device according to claim 1, a system for cleaning and coating substrates according to claim 10, and a method having the features of the respective independent claim 11.

Optional embodiments are provided in the dependent claims and the description. In a first aspect a cleaning device adapted for cleaning substrates for spectacle lenses mounted on a calotte-shaped substrate holder is provided, wherein the substrate holder is rotatable in an azimuthal direction around a central axis of the calotte-shaped substrate holder. The cleaning device comprises a first cleaning arm having one or more ejection nozzles and one or more suction nozzles arranged at the first cleaning arm. The first cleaning arm has an arc-shape with a radius of curvature in the range from 0,5 m to 2 m and a length in an altitudinal direction in the range from 0,5 m to 2 m.

In another aspect, a system for cleaning and coating substrates for spectacle lenses is provided. The system comprises a calotte-shaped substrate holder suitable for holding the substrate during a cleaning and coating process. The system is characterized in that it further comprises a cleaning device according to the disclosure.

In yet another aspect, a method for cleaning multiple substrates for spectacle lenses is provided. The method comprises mounting the substrates at mounting slots on a calotte-shaped substrate holder, wherein the mounting slots are arranged on the calotte-shaped substrate holder in one or more rows extending in a concentric manner around a central axis of the calotte-shaped substrate holder. The method further comprises arranging an arc-shaped first cleaning arm of a cleaning device over or underneath the calotte-shaped substrate holder such that the arc-shaped first cleaning arm of the cleaning device extends in an altitudinal direction of the calotte-shaped substrate holder over at least some of the rows of mounting slots. The first cleaning arm has an arc-shape with a radius of curvature in the range from 0,5 m to 2 m and a length in an altitudinal direction in the range from 0,5 m to 2 m. In addition, the method comprises cleaning the substrates by ejecting a cleaning fluid through one or more ejection nozzles provided at the first cleaning arm onto the substrate holder and sucking at least a part of the ejected cleaning fluid into one or more suction nozzles provided at the first cleaning arm and providing a rotational movement of the calotte-shaped substrate holder in an azimuthal direction around the central axis with respect to the first cleaning arm.

In yet another aspect, a method being suitable for manufacturing a spectacle lens from a substrate for a spectacle lens is provided. The method is characterized in that it includes a step of cleaning the substrate for the spectacle lens using an above-disclosed method for cleaning multiple substrates for spectacle lenses.

A substrate for a spectacle lens may be an optical substrate for manufacturing a spectacle lens from the substrate. The substrate may have suitable dimensions for manufacturing one spectacle lens from one substrate. The substrate may form a precursor for an optical product. Alternatively, the substrate may be an (uncut) almost finished optical product which will be finished after completion of the coating process. The substrate may be a spectacle lens blank, a semi-finished spectacle lens product or a finished spectacle lens product and may in particular meet requirements specified in EN ISO 13666:2012. "Multiple substrates for spectacle lenses" may mean multiple substrates, wherein each substrate is intended for manufacturing one spectacle lens based on the respective substrate. Throughout the disclosure, the term "substrate" may in general relate to a substrate for a spectacle lens unless explicitly specified otherwise.

Cleaning a substrate may relate to a treatment including removing contaminants and/or moisture and/or any other undesired objects from the substrate which, if not removed, may compromise the coating result. The cleaning process may include subjecting the substrates to a stream of a cleaning fluid to remove such contaminants, wherein the cleaning fluid may comprise a gaseous fluid and/or a liquid fluid. The cleaning fluid may in particular comprise or consist of air and/or or nitrogen. The cleaning fluid may be ejected through one or more ejection nozzles onto the substrate and may be collected by one or more suction nozzles after being in contact with at least one surface of the substrates.

The suction nozzles and the ejection nozzles may be connected with suitable hosing and/or tubing for supplying the cleaning fluid and/or the vacuum to the suction nozzles and/or the ejection nozzles. The tubing and/or hosing and/or connected valves may be attached at the first cleaning arm and/or the second cleaning arm.

The calotte-shaped substrate holder may be simply referred to as substrate holder. The substrate holder being calotte-shaped means that the shape of the substrate holder follows the shape of a calotte. Hence, the substrate holder may be domed, wherein the dome may have the shape of a half sphere or any other portion of a sphere having the shape of a spherical cap or spherical dome. The calotte-shaped substrate holder may have the appearance of a spherical cap but may deviate from the strict mathematical shape of a spherical cap. The calotte-shaped substrate holder may be rotationally symmetric around the central axis, wherein the central axis may form a central axis of a sphere defining the calotte or spherical cap describing the shape of the substrate holder. The calotte-shape of the substrate holder has a radius of curvature in the range from 0,5 m to 2 m and in particular a radius of curvature in the range from 0,5 m to 1 m, i.e., the sphere describing the shape of the calotte holder may have a radius of curvature in the range from 0,5 m to 2 m and in particular a radius of curvature in the range from 0,5 m to 1,2 m or 0,8 m to 1,2 m. In case the radius of curvature varies for different altitudinal positions of the calotte-shaped, the radius of curvature may be in the specified range at any position. In other words, any radius of curvature which the calotte-shaped substrate holder exhibits may be well in the specified range. The azimuthal direction and the altitudinal direction may relate to a horizontal coordinate system. The azimuthal direction, altitudinal direction and radial direction used throughout this disclosure may correspond to this sphere describing the shape of the calotte-shaped substrate holder, wherein the azimuthal direction and the altitudinal direction extend on the surface of such sphere and the radial direction extends perpendicular to the surface of such sphere and, hence, towards the center of said sphere. The altitudinal direction of the substrate holder may correspond to the altitudinal direction of the cleaning arm(s). A rotational movement of the substrate holder around its central axis may be provided by a motor unit rotating the calotte-shaped substrate holder around its central axis. The calotte-shaped substrate holder may comprise several parts, such as four segments, which may together form the calotte-shaped substrate holder.

The arc shape of the first and/or second cleaning arm may relate to a spherical arc shape, i.e., the shape of the first and/or second cleaning arm may extend according to an arc forming a part of a surface of a mathematical sphere. The sphere may correspond to the sphere describing the shape of the calotte-shaped substrate holder or may have a larger or smaller radius of curvature. The arc shape may have the appearance of a sphere but may deviate from the strict mathematical shape of a spherical cap. Accordingly, the first cleaning arm has a circular arc-shape. The radius of curvature of the arc-shape of the first cleaning arm and/or second cleaning arm may be identical to the radius of curvature of the calotte-shaped substrate holder or may deviate by not more than 20% and optionally not more 10% from the radius of curvature of the calotte-shaped substrate holder. However, the calotte-shaped substrate holder and/or the first and/or second cleaning arm may have a shape deviating from a spherical shape. In particular, a radius of curvature may vary along the altitudinal position of the calotte-shaped substrate holder and/or along the altitudinal position of the first and/or second cleaning arm. The radius of curvature may decrease for lower altitudinal positions of the calotte-shaped substrate holder and/or the first and/or second cleaning arm, respectively. However, the calotte-shaped substrate holder and/or the first and/or second cleaning arm may be adapted such that at any altitudinal position of the calotte-shaped substrate holder and/or of the first and/or second cleaning arm the radius of curvature is in a range from 0,5 m to 2 m.

Arranging the first cleaning arm over the calotte-shaped substrate holder means that the first cleaning arm is arranged adjacent to the outer surface of the calotte-shaped substrate holder, when the calotte-shaped substrate holder is arranged such that the opening of the calotte-shaped substrate holder is oriented in a downward direction. This may correspond to the typical orientation of the calotte-shaped substrate holder for the intended use of coating the substrates mounted to the calotte-shaped substrate holder. However, in principle other orientations of the calotte-shaped substrate holder are possible. Likewise, arranging the first cleaning arm underneath the calotte-shaped substrate holder means that the first cleaning arm is arranged adjacent to the inner surface of the calotte-shaped substrate holder, when the calotte-shaped substrate holder is arranged such that the opening of the calotte-shaped substrate holder is oriented in a downward direction.

Mounting slots are such slots formed in the calotte-shaped substrate holder which are adapted to receive a substrate in a manner to expose at least one surface of the substrate for the coating process. Each of the mounting slots may comprise a hole in the calotte-shaped substrate holder on which a substrate may be placed, such that the coating may be applied to the surface through the hole in the whole in the substrate holder. The hole of the mounting slot may be adapted to support the substrate at the edge or rim of the substrate while exposing a central region of the substrate to be accessible for the coating process.

The disclosure provides the advantage that the cleaning process for cleaning the substrates prior to a coating process may be carried out in an at least partly automated manner. This may allow reducing the required time effort and the manual labor for cleaning the substrates and, hence, reduce the costs for cleaning and coating process. Moreover, the disclosure may provide the advantage that multiple substrates may be cleaned simultaneously and, hence, the required time for the cleaning process may be further reduced.

Furthermore, the disclosure provides the advantage that the cleaning process may be carried out at least partly while the substrates are mounted in the mounting slots. In other words, the cleaning process may be carried out at least partly without the need of removing the substrates from the mounting slots. This may reduce the risk of unintentionally swapping the substrates during the cleaning process and, hence, may allow reducing a reject of substrates during the manufacturing process including the cleaning and a coating process.

In addition, the disclosure may provide the advantage that the cleaning process may be carried out while the substrates are mounted in a manner ready for a possible subsequent coating process. Hence, the time between the cleaning process and the subsequent coating process can be reduced, which may reduce the risk of the cleaned substrates being subject of further contaminations between the cleaning process and the coating process. Moreover, the cleaning process may optionally be carried out at least partly within the coating device, i.e., while the calotte-shaped substrate holder is arranged inside a coating device, in which the subsequent coating process may be carried out. This may render any movement of the calotte-shaped substrate holder with the substrates mounted thereto after the cleaning process obsolete. Instead, it may allow commencing the coating process right after the cleaning process and by this to minimize the risk of any further contaminations affecting the substrates after the cleaning process.

At least one of the one or more ejection nozzles may be movable in an altitudinal direction along the first cleaning arm. This may allow moving the one or more ejection nozzles to different altitudinal positions of the first cleaning arm and correspondingly to different altitudinal positions of the calotte-shaped substrate holder. Combined with several full rotations of the substrate-holder around the central axis, all mounting slots may be addressed by the one or more ejection nozzles even if only one or few mounting slots are address in each position of the one or more movable ejection nozzles and each rotatory position of the substrate holder. In other words, this may allow subsequently covering a large area of the calotte-shaped substrate holder by providing only one or more ejection nozzles covering a small part of the substrate holder. The same may apply to the suction nozzles. I.e., it may be sufficient to provide one or more ejection nozzles being movable in an altitudinal direction along the first cleaning arm. The movements of the one or more ejection nozzles and the one or more movable suction nozzles may be synchronized. Accordingly, the method for cleaning multiple substrates may further comprise moving at least one of the one or more ejection nozzles along the altitudinal direction while providing a rotational movement of the calotte-shaped substrate holder in the azimuthal direction around the central axis.

The one or more ejection nozzles may be directed in a radial direction with respect to the first cleaning arm. In particular, the ejection nozzles may be directed to that side of the cleaning arm, at which the substrates are arranged during a cleaning process. The ejection nozzles and/or suction nozzles may be oriented at an angle of about 45° with respect to the surface of the substrates, which provide a suitable stream of cleaning fluid over the substrates from the ejection nozzles to the suction nozzles. In case a cleaning arm is arranged over the calotte-shaped substrate holder, the ejection nozzles may be directed in a radially inward direction. If the cleaning arm is directed underneath the calotte-shaped substrate holder, the ejection nozzles may be directed in a radially outward direction. The cleaning arm may be arranged at a predetermined position and orientation with respect to the calotte-shaped substrate holder. The cleaning arm may be adapted such that the one or more movable ejection nozzles may be oriented in a radial direction or in a direction having a predetermine angle with respect to the substrates in any altitudinal position along the cleaning arm. However, the one or more movable ejection nozzles may be adapted to have a variable orientation, which may allow adjusting the orientation of the one or more ejection nozzles to the mounting slots or substrates to be addressed. Likewise, the one or more suction nozzles may be directed in a radial direction and/or may be adapted to have a variable position. The orientation of the one or more ejection nozzles and the one or more suction nozzles may be chosen in dependence on a distance between the one or more ejection nozzles and the one or more suction nozzles.

According to some embodiments, the ejection nozzles and/or the suction nozzles may be oriented such as to have an angle of 45° with respect to the surface of the substrates, to which they are directed.

The one or more ejection nozzles may comprise multiple ejection nozzles distributed in the altitudinal direction on the cleaning arm. The multiple ejection nozzles may be provided such that a fluid stream ejected by the multiple ejection nozzles covers the entire section of the calotte-shaped substrate holder covered by the respective cleaning arm. This may allow covering multiple rows of mounting slots by the stream of cleaning fluid ejected through the multiple ejection nozzles and may, thus, render a movement of one or more ejection nozzles obsolete.

The cleaning device may further comprise a second cleaning arm having one or more ejection nozzles and one or more suction nozzles arranged at the second cleaning arm. The second cleaning arm may have an arc-shape with a radius of curvature in the range from 0,5 m to 2 m and a length in an altitudinal direction in the range from 0,5 m to 2 m. The second cleaning arm may be adapted in an identical or similar manner to the first cleaning arm. However, the orientation or direction of the ejection nozzle(s) and/or the suction nozzle(s) may be different as compared to the first cleaning arm in order to direct the ejection nozzle(s) and suction nozzle(s) to the calotte-shaped substrate holder when arranged at the opposite side of the calotte-shaped substrate holder as compared to the first substrate holder. In general, all features and properties described with respect to the first cleaning arm may apply also to the second cleaning arm and vice versa. Moreover, disclosure referring to a cleaning arm in general may apply to the first cleaning arm and the second cleaning arm in the same manner.

The first cleaning arm and the second cleaning arm may be arranged parallel to each other and spaced apart from each other in a vertical direction. This may allow arranging the calotte-shaped substrate holder in-between the first and second cleaning arm, such that the inner surface of the calotte-shaped substrate holder may be exposed to the second cleaning arm and the outer surface of the calotte-shaped substrate holder may be exposed to the first cleaning arm or vice versa. In other words, the first and second cleaning arm may be adapted and arranged to at least partly enclose the cross-section of the sheath wall of the calotte-shaped substrate holder. Accordingly, the ejection nozzles of the first cleaning arm and the ejection nozzles of the second cleaning arm may be at least partly directed towards each other. This may allow simultaneously cleaning a front surface and a back surface of the substrate.

The vertical spacing between the first cleaning arm and the second cleaning arm may be in a range from 0,01 m to 0,5 m and optionally from 0,05 m to 0,2 m. Optionally the vertical spacing between the first cleaning arm and the second cleaning arm may be adjustable. This may facilitate arranging the calotte-shaped substrate holder between the cleaning arms. Alternatively or additionally, the vertical spacing between the first cleaning arm and the second cleaning arm may be set such that a distance between the first cleaning arm and a surface of a substrate mounted on the calotte-shaped substrate holder facing the first cleaning arm is in a predetermined range, such as from 0,01 m to 0,1 m. This may leave sufficient space for arranging the calotte-shaped substrate holder between the first and second cleaning arm and may allow a distance between the cleaning arms and the substrates mounted in the mounting slots of the calotte-shaped substrate holders sufficiently small to achieve a suitable stream of cleaning fluid from the ejection nozzles to clean the substrates.

In the above-disclosed method, providing the rotational movement of the calotte-shaped substrate holder in the azimuthal direction around the central axis with respect to the first cleaning arm may comprise rotating the calotte-shaped substrate holder by at least 360° around the central axis. This may allow applying a stream of cleaning fluid ejected through the ejection nozzles in the first and/or second cleaning arm along an altitudinal direction of the calotte-shaped substrate holder over the entire surface of the calotte-shaped substrate holder. Hence, although the ejection nozzles may be arranged solely at the cleaning arms covering only a small portion of the entire calotte-shaped substrate holder, the entire calotte-shaped substrate holder and all mounting slots provided therein in one or more rows extending along concentrical circles at the calotte-shaped substrate holder may be subjected to the cleaning process.

The arc-shaped first cleaning arm of the cleaning device may be arranged over the calotte-shaped substrate holder. In this case, the method may further comprise arranging an arc-shaped second cleaning arm of the cleaning device underneath the calotte-shaped substrate holder such that the arc-shaped second cleaning arm of the cleaning device extends in the altitudinal direction of the calotte-shaped substrate holder over at least some of the rows of mounting slots. Accordingly, the step of cleaning the substrates may further comprise ejecting a cleaning fluid through one or more ejection nozzles provided at the second cleaning arm onto the substrate holder and sucking at least a part of the ejected cleaning fluid into one or more suction nozzles provided at the second cleaning arm and providing a rotational movement of the calotte-shaped substrate holder in an azimuthal direction around the central axis with respect to the second cleaning arm. This may allow simultaneously cleaning an upper surface and a lower surface of the substrates by applying the cleaning fluids from one side via the first cleaning arm and from the other side via the second cleaning arm. This may render an additional step for flipping the substrates obsolete and, hence, may reduce the required time and costs for the cleaning process. Moreover, a risk of contaminating or unintentionally swapping the substrates in a flipping process can be avoided or reduced. However, according to other embodiments the method may further comprise a step of flipping all or some of the substrates mounted to the substrate holder. The flipping may be carried out by hand or in an at least partly automated manner. The flipping process may optionally be carried out using a magnetic force. A flipping step may be advantageous for such embodiments of cleaning devices, which do not offer simultaneously cleaning the substrates from both sides.

The method may comprise arranging the calotte-shaped substrate holder in a coating device and the step of arranging the first arc-shaped second cleaning arm of the cleaning device over or underneath the calotte-shaped substrate may comprise arranging the cleaning device adjacent to the coating device. Moreover, the method may further comprise removing the cleaning device from the coating device after cleaning the substrates. This allows carrying out the cleaning process while the calotte-shaped substrate holder is arranged at least partly inside a coating device. This may render a rearrangement of the substrate holder between the completion of the cleaning process and the commencement of the coating process obsolete and may, hence, reduce the required time for the cleaning and coating process as well as reduce the risk of contaminations between the cleaning and coating process. Moreover, this may evade a need for providing a cleaning device capable of housing the entire calotte-shaped substrate holder during the cleaning process. Instead, the cleaning device may be arranged such as to adjoin the coating device housing the calotte-shaped substrate holder. For instance, an opening provided for inserting the calotte-shaped substrate holder into the coating device may be used by the cleaning device for accessing the calotte-shaped substrate holder arranged inside the coating device. Moreover, this may bear the advantage that the cleaning device may be subsequently used in combination with different coating devices. Hence, a cleaning device may be used for several coating devices. This may allow providing only a smaller number of cleaning devices than the number of coating devices.

The coating device and/or the cleaning device may comprise a rubber lip to seal the interface between the opening of the coating device and the cleaning device arranged next to the opening of the cleaning device. This may prevent at least partly in ingress of contaminants from the outside.

A rotational movement of the calotte-shaped substrate holder with respect to the cleaning arm or vice versa may be realized by providing at least one of the following movements: rotating the calotte-shaped substrate holder in the azimuthal direction around the central axis and moving the first cleaning arm in an azimuthal direction around the calotte-shaped substrate holder. A mount for holding the calotte-shaped substrate holder inside a coating device may be motorized with a motor unit to provide the desired rotational movement.

The disclosure further includes a system for cleaning and coating substrates. The system for cleaning and coating substrates comprises a calotte-shaped substrate holder suitable for holding the substrate during a cleaning and coating process. The calotte-shaped substrate holder is rotatable in an azimuthal direction around a central axis of the calotte-shaped substrate holder, wherein the calotte-shaped substrate holder provides one or more rows of mounting slots for mounting the substrates, wherein the rows extend on the calotte-shaped substrate holder in a concentric manner around the central axis of the calotte-shaped substrate holder. The system for cleaning and coating is characterized in that the system further comprises a cleaning device comprising a first arc-shaped cleaning arm having one or more ejection nozzles and one or more suction nozzles arranged at the arc-shaped cleaning arm. The cleaning device is arrangeable with respect to the calotte-shaped substrate holder to extend over the entire altitudinal length of the calotte-shaped substrate holder at a distance of not more than 0,2 m from the calotte-shaped substrate-holder and such that the one or more ejection nozzles and the one or more suction nozzles are directed towards the calotte-shaped substrate-holder. All above-disclosed features and properties presented with respect to the cleaning device may apply also for this cleaning and coating system.

Further optional embodiments will be illustrated in the following with reference to the drawings.

The Figures show:
- Figures 1A and 1B:: a cleaning device according to an optional embodiment in a perspective view and in a side view;
- Figures 2A and 2B:: an enlarged view on some parts of the cleaning arms of the cleaning device presented in Figures 1A and 1B;
- Figure 3A:: a schematic sketch of a conventional coating device;
- Figure 3B:: an exemplary photograph of a conventional coating device;
- Figure 3C:: a schematic sketch of a cleaning device according to an embodiment as presented in Figure 1B arranged next to an opened coating device;
- Figure 4:: a method for cleaning multiple substrates.

In the drawings the same reference signs are used for corresponding or similar features in different drawings.

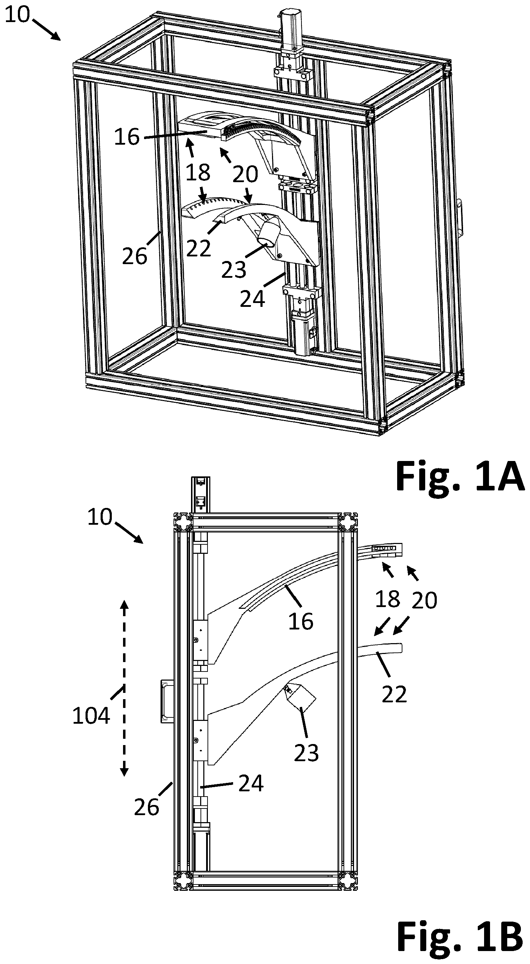

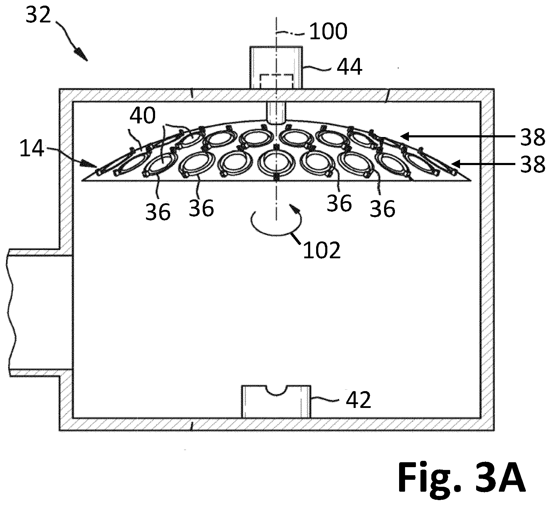

Figures 1A and 1B show a cleaning device 10 according to an optional embodiment in a perspective view (Figure 1A) and in a side view. The cleaning device 10 is adapted for cleaning substrates 40 mounted on a conventional calotte-shaped substrate holder 14 (exemplarily shown in Figure 3A), wherein the calotte-shaped substrate holder 14 is rotatable in an azimuthal direction 102 around a central axis 100 of the calotte-shaped substrate holder 14. The cleaning device 10 comprises a first cleaning arm 16 having one or more ejection nozzles 18 and one or more suction nozzles 20 arranged at the first cleaning 16 arm. The first cleaning arm 16 has a circular arc-shape with a radius of curvature in the range from 0,5 m to 2 m and a length in an altitudinal direction 106 in the range from 0,5 m to 2 m.

Moreover, the cleaning device 10 comprises a second cleaning arm 22 having one or more ejection nozzles 18 and one or more suction nozzles 20 arranged at the second cleaning arm 22, wherein also the second cleaning arm 22 has an arc-shape with a radius of curvature in the range from 0,5 m to 2 m and a length in an altitudinal direction 106 in the range from 0,5 m to 2 m. The shape of the second cleaning arm 22 corresponds to the shape of the first cleaning arm 16. The second cleaning arm 22 further comprises a valve 23 for connecting hoses or tubing for providing suction at the suction nozzles 20.

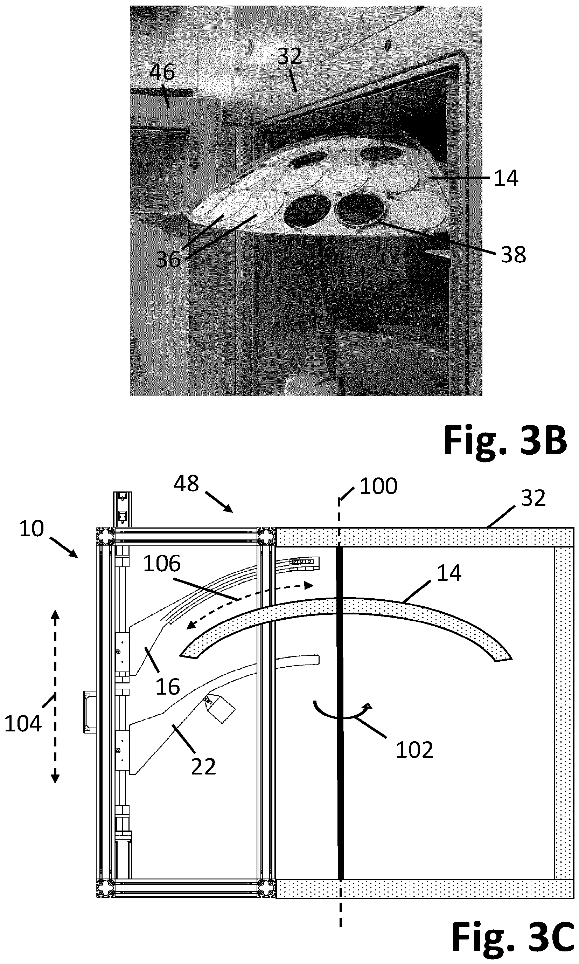

The cleaning device 10 comprises one or more vertical posts 24 extending in the vertical direction 104 on which the first and the second cleaning arm 16, 22 are mounted. The cleaning arms 16, 22 are movable in a vertical direction along the one or more vertical posts 24. Moreover, the cleaning device 10 comprises a frame structure 26 to support and stabilize the cleaning device 10. According to some embodiments, the frame structure 26,may be adapted to allow arranging the cleaning device 10 in such a manner to adjoin a coating device 32 (see Figure 3C), which may at least partly house the calotte-shaped substrate holder 14.

The frame structure 26 may be closed with plate elements extending between the frame elements to form a closed housing of the cleaning device 10. This may allow preventing an ingress of contaminants into the cleaning device 10 and/or into a coating device 32, when the cleaning device 10 is arranged at the opening of the coating device 32. In addition, this may protect a user from interfering with the moving calotte-shaped substrate holder 14.

According to the presented embodiment, the first cleaning arm 16 and the second cleaning arm 22 are arranged parallel to each other and spaced apart from each other in a vertical direction 104. This may allow arranging a side wall of a calotte-shaped substrate holder 14 to extend between the first and the second cleaning arm 16, 22 such that a distance between the first cleaning arm 16 and the calotte-shaped substrate holder 14 and between the second cleaning arm 22 and the calotte-shaped substrate holder 14 are optionally constant over the entire overlapping region of the calotte-shaped substrate holder 14 and the first and second cleaning arm 16, 22, respectively. According to some embodiments, the vertical spacing between the first cleaning arm 16 and the second cleaning arm 22, i.e., along the vertical direction 104, may be in a range from 0,01 m to 0,5 m and in particular in a range from 0,1 m to 0,2 m. This may offer a suitable space for arranging the calotte-shaped substrate holder 14 in-between and to provide a suitable distance between the cleaning arms 16, 22 and the calotte-shaped substrate holder 14 to ensure a sufficient stream of cleaning fluid for a reliable cleaning of the substrates 40 mounted on the calotte-shaped substrate holder 14.

The first cleaning arm 16 and the second cleaning arm 22 are directed towards each other such that substrates 40 mounted on a calotte-shaped substrate holder 14 may be simultaneously cleaned from both sides, i.e. from top and from underneath. For this purpose, the ejection nozzles 18 of the first and/or second cleaning arm 16, 22 and the ejection nozzles 18 of the first and second cleaning arm 16, 22 are at least partly directed towards each other.

The second cleaning arm 22 further comprises a valve 23 for connecting hoses or tubing for providing suction at the suction nozzles 20.

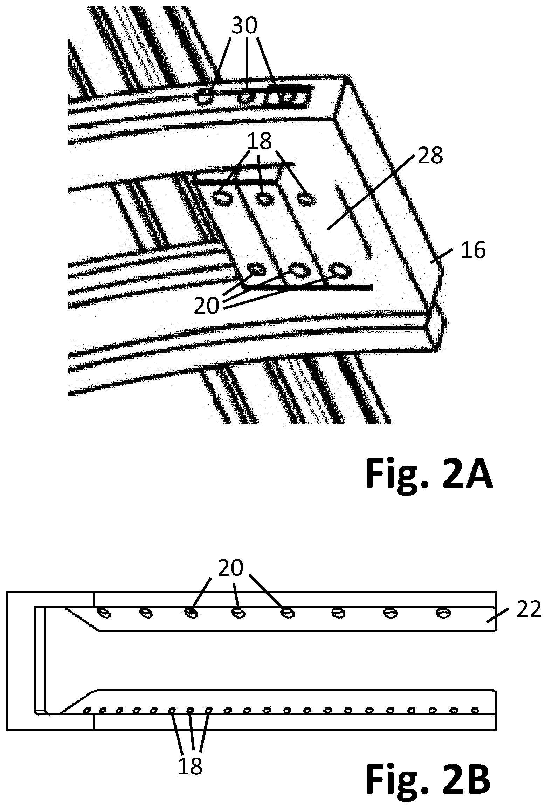

Figures 2A and 2B reveal an enlarged view on some parts of the cleaning arms 16, 22 of the cleaning device presented in Figures 1A and 1B. In particular, the perspective views presented in Figures 2A and 2B show the ejection nozzles 18 mounted at the respective cleaning arms 16, 22. The presented cleaning arms 16, 22 differ from each other in their configuration. The cleaning arm 16 shown in Figure 2A comprises three ejection nozzles 18 and three suction nozzles 20 mounted on a sledge 28 movable along the cleaning arm 16. A linear actuator may be provided for moving the sledge 28 along the cleaning arm 16. For cleaning multiple substrates 40 mounted in several concentrical rows 38 of mounting slots 36 (see Figure 3A) on the calotte-shaped substrate holder 14, the sledge 28 may be moved along the cleaning arm 16 to rearrange the ejection nozzles 18 and suction nozzles 20 with respect to the rows 38 of mounting slots 36 in order to sequentially cover all rows 38 of mounting slots 36. The movement of the sledge 28 may be combined with rotating movement the calotte-shaped substrate holder 14 around its central axis 100 in order to cover all mounting slots 36 in each of the rows 38. The rotation movement of the calotte-shaped substrate holder 14 and the movement of the sledge 28 along the cleaning arm 16, which corresponds to an altitudinal movement with respect to the calotte-shaped substrate holder 14, may be effectively combined to a spiral movement. Alternatively or additionally, the sledge 28 may be moved in a stepwise manner when a full rotation of the calotte-shaped substrate holder 14 is completed, to arrange the ejection nozzles 18 at the next row of mounting slots 36. The sledge 28 may be moved along the cleaning arm 16 by means of a gear rack following the shape of the cleaning arm 16. Interfaces 30 for connecting a supply of cleaning fluid and/or for suction may be provided at the sides of the sledge 28, which may avoid an undesired interference with the stream of the cleaning fluid and which allows possible hoses connected to the sledge 28 to follow the sledge's 28 movements in an undisturbed manner. According to other embodiments, the number of ejection nozzles 18 and suction nozzles 20 arranged on the sledge 28 may differ from each other. Therefore, according to some embodiments the at least one of the one or more ejection nozzles 18 may be movable in an altitudinal direction 106 along the cleaning arm 16.

The cleaning arm 22 presented in Figure 2B has multiple ejection nozzles 18 and suction nozzles 20 arranged along the cleaning arm 22. The ejection nozzles 18 and suction nozzles 20 may be equally spaced from each other and may be distributed over a sufficient length of the cleaning arm 22 to extend in an altitudinal direction 106 over all rows 38 of mounting slots 36 provided in a respective calotte-shaped substrate holder 14. This may allow cleaning all substrates 40 mounted in the calotte-shaped substrate holder 14 within one rotation of the substrate holder 14 without a need of moving the ejection nozzles 18 and suction nozzles 20 in an altitudinal direction 106. Accordingly, a cleaning 16 arm according to this embodiment does not require ejection nozzles 18 and/or suction nozzles 20 mounted on a sledge 28 (as compared to Figure 2A). Hence, the one or more ejection nozzles 18 comprise multiple ejection nozzles 18 distributed in the altitudinal direction 106 on the cleaning arm 22.

In general, the cleaning device 10 may comprise a first cleaning arm 16 and a second cleaning arm 22. Each of these cleaning 16, 22 arms may be formed according to any one of the presented embodiments. The cleaning arms 16 and 22 may have an identical configuration or differ from each other.

The one or more ejection nozzles 18 and/or the one or more suction nozzles 20 may be directed in a radial direction with respect to the first cleaning arm 16. This may allow directing the stream of cleaning fluid directly onto the substrates 40 mounted at the substrate holder 14. However, the direction of the ejection nozzles 18 and the suction nozzles 20 may be tilted with respect to the radial direction in order to achieve a continuous stream of cleaning fluid from the ejection nozzles 18 to the suction nozzles 20 over the substrates 40.

Figure 3A exemplarily depicts a schematic sketch of a conventional coating device 32 having a conventional calotte-shaped substrate holder 14 arranged therein, as described for instance in WO 2022/012955 A1. The calotte-shaped substrate holder 14 is dome-shaped and provides multiple mounting slots 36, which are arranged in several rows 38 (two rows according to the presented exemplary calotte-shaped substrate holder 14) extending in a concentrical manner around a central axis 100. Each mounting slot 36 may receive a substrate 40 and hold the substrate 40 such that a lower surface may be exposed to the particle vapor provided by the evaporation source 42. The calotte-shaped substrate holder 14 is rotatable around the central axis 100. The rotational movement may be affected by a motor unit 44.

Figure 3B shows an exemplary photograph of a conventional coating device 32. The coating device 32 may be openable by a respective opening, such as a door 46, which may allow accessing the inside of the coating device 32 and, hence, the calotte-shaped substrate holder 14. In particular, when the opening of the coating device 32 is opened, for instance by opening the door 46, at least a part of the calotte-shaped substrate holder 14 may protrude outside the coating device 32 and may be accessed by a cleaning device 10 according to an embodiment of the disclosure.

Figure 3C shows a schematic sketch of a cleaning device 10 according to an embodiment as presented in Figure 1B arranged next to an opened coating device 32. The part of the calotte-shaped substrate holder 14 protruding from the coating device 32 extends in the altitudinal direction 106 between the first cleaning arm 16 and the second cleaning arm 22, such that the cleaning arms 16, 22 extend in the altitudinal direction 106 over all rows 38 of mounting slots 36 provided in the calotte-shaped substrate holder 14. By rotating the calotte-shaped substrate holder 14 in the azimuthal direction 102, all substrates 40 mounted in the mounting slots 36 on the calotte-shaped substrate holder 14 may be cleaned. When the cleaning process is completed, the cleaning device 10 may be removed from the coating device 32 and the coating device 32 may be closed to carry out a process for coating the mounted and cleaned substrates 40. Thus, Figure 3C depicts a system 48 for cleaning and coating substrates 40, wherein the system 48 comprises a calotte-shaped substrate holder 14 suitable for holding the substrates 40 during a cleaning and coating process and a cleaning device 10 having the features of claim 1. Moreover, the system 48 may include the entire coating device 32.

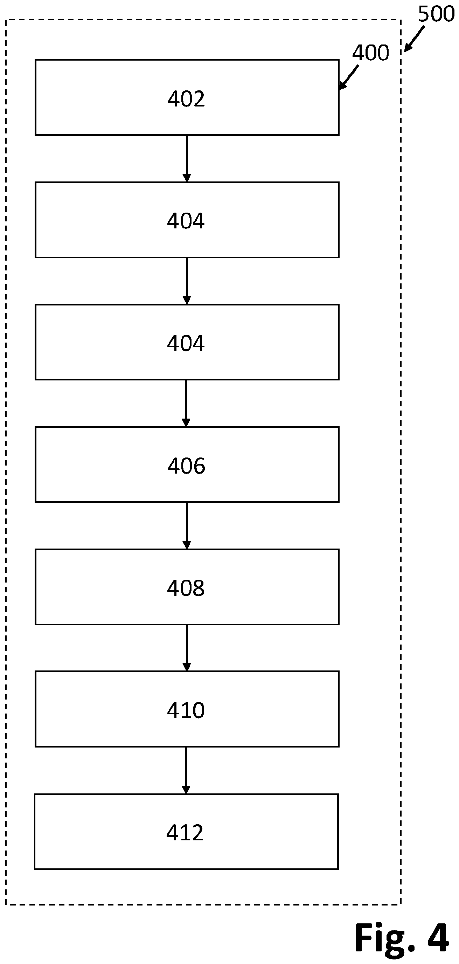

With reference to Figure 4 a method 400 for cleaning multiple substrates 40 is presented.

The method 400 comprises a step 402 of mounting the substrates 40 at mounting slots 36 on a calotte-shaped substrate holder 14, wherein the mounting slots 36 are arranged on the calotte-shaped substrate holder 14 in one or more rows 38 extending in a concentric manner around a central axis 100 of the calotte-shaped substrate holder 14.

The method 400 further comprises a step 404 of arranging an arc-shaped first cleaning arm 16 of a cleaning device 10 over or underneath the calotte-shaped substrate holder 14 such that the arc-shaped first cleaning arm 16 of the cleaning device 10 extends in an altitudinal direction 106 of the calotte-shaped substrate holder 14 over at least some of the rows 38 of mounting slots 36. The arc-shaped first cleaning arm 16 of the cleaning device 10 may be arranged over the calotte-shaped substrate holder 14. Moreover, an arc-shaped second cleaning arm 22 of the cleaning device 10 may be arranged underneath the calotte-shaped substrate holder 14 such that the arc-shaped second cleaning arm 22 of the cleaning device 10 extends in the altitudinal direction 106 of the calotte-shaped substrate holder 14 over at least some of the rows 38 of mounting slots 36.

The method 400 further comprises a step 406 of cleaning the substrates 40 by ejecting a cleaning fluid through one or more ejection nozzles 18 provided at the first cleaning arm 16 onto the calotte-shaped substrate holder 14 and sucking at least a part of the ejected cleaning fluid into one or more suction nozzles 20 provided at the first cleaning arm 16 and providing a rotational movement of the calotte-shaped substrate holder 14 in an azimuthal direction 102 around the central axis 100 with respect to the first cleaning arm 16. Providing the rotational movement of the calotte-shaped substrate holder 14 in the azimuthal direction 102 around the central axis 100 with respect to the first cleaning arm 16 may comprise rotating the calotte-shaped substrate holder 14 by at least 360° around the central axis 100. Step 406 may further comprise ejecting a cleaning fluid through one or more ejection nozzles 18 provided at the second cleaning arm 22 onto the substrate holder 14 and sucking at least a part of the ejected cleaning fluid into one or more suction nozzles 20 provided at the second cleaning arm 22. The provided rotational movement of the calotte-shaped substrate holder 14 in an azimuthal direction 102 around the central axis 100 also applies with respect to the second cleaning arm 22.

The method 400 may further comprise a step 408 of moving at least one of the one or more ejection nozzles 18 along the altitudinal direction 106 while providing a rotational movement of the calotte-shaped substrate holder 14 in the azimuthal direction 102 around the central axis 100.

The method 400 may further comprise a step 410 of arranging the calotte-shaped substrate holder 14 in a coating device 32. This step may be carried out before or after the steps 404 and 406. If the method comprises the step 410, the step 404 of arranging the arc-shaped first cleaning arm 16 of the cleaning device 10 over or underneath the calotte-shaped substrate holder 14 may comprise arranging the cleaning device 10 adjacent to the coating device 32. Moreover, the method may comprise a step 412 of removing the cleaning device 10 from the coating device 32 after cleaning the substrates 40 and coating the substrates 40 in the coating device 32.

The method 400 may form a part of a method 500 being suitable for manufacturing a spectacle lens from a substrate 40 for a spectacle lens. The method 500 for manufacturing the spectacle lens may use a cleaning device 10 according to the disclosure for cleaning the substrate 40, wherein cleaning the substrate 40 may be part of a process for cleaning multiple substrates 40. The method 500 for manufacturing may further comprise a step of coating the substrate for the spectacle lens using a coating device according to the disclosure.

### List of reference signs

- 10: cleaning device
- 14: calotte-shaped substrate holder
- 16: first cleaning arm
- 18: ejection nozzle
- 20: suction nozzle
- 22: second cleaning arm
- 23: valve
- 24: vertical post
- 26: frame structure
- 28: sledge
- 30: interface
- 32: coating device
- 36: mounting slot
- 38: row of mounting slots
- 40: substrate
- 42: evaporation source
- 44: motor unit
- 46: door of coating device
- 48: system for cleaning and coating substrates

- 100: central axis
- 102: azimuthal direction
- 104: vertical direction
- 106: altitudinal direction

- 400: method for cleaning substrates for spectacle lenses
- 402-412: method steps
- 500: method for manufacturing a spectacle lens

## Claims

1. Cleaning device (10) adapted for cleaning substrates (40) for spectacle lenses mounted on a calotte-shaped substrate holder (14), the calotte-shaped substrate holder (14) being rotatable in an azimuthal direction (102) around a central axis (100) of the calotte-shaped substrate holder (14),
wherein the cleaning device (10) comprises a first cleaning arm (16) having one or more ejection nozzles (18) and one or more suction nozzles (20) arranged at the first cleaning arm (16);
**characterized in that**
the first cleaning arm (16) has an arc-shape with a radius of curvature in the range from 0,5 m to 2 m and a length in an altitudinal direction (106) in the range from 0,5 m to 2 m.

2. Cleaning device (10) according to claim 1, wherein the first cleaning arm (16) has a circular arc-shape.

3. Cleaning device (10) according to claim 1 or 2, wherein at least one of the one or more ejection nozzles (18) is movable in an altitudinal direction (106) along the first cleaning arm (16).

4. Cleaning device (10) according to any one of the preceding claims, wherein the one or more ejection nozzles (18) are directed in a radial direction with respect to the first cleaning arm (16).

5. Cleaning device (10) according to any one of the preceding claims, wherein the one or more ejection nozzles (18) comprise multiple ejection nozzles (18) distributed in the altitudinal direction (106) on the first cleaning arm (16).

6. Cleaning device (10) according to any one of the preceding claims, further comprising a second cleaning arm (22) having one or more ejection nozzles (18) and one or more suction nozzles (20) arranged at the second cleaning arm (22), wherein the second cleaning arm (22) has an arc-shape with a radius of curvature in the range from 0,5 m to 2 m and a length in an altitudinal direction (106) in the range from 0,5 m to 2 m.

7. Cleaning device (10) according to claim 6, wherein the first cleaning arm (16) and the second cleaning arm (22) are arranged parallel to each other and spaced apart from each other in a vertical direction (104).

8. Cleaning device (10) according to claim 7, wherein the vertical spacing between the first cleaning arm (16) and the second cleaning arm (22) is in a range from 0,01 m to 0,5 m.

9. Cleaning device (10) according to any one of claims 6 to 8, wherein the ejection nozzles (18) of the first cleaning arm (16) and the ejection nozzles (18) of the second cleaning arm (22) are at least partly directed towards each other.

10. System (48) for cleaning and coating substrates (40), the system (48) comprising a calotte-shaped substrate holder (14) suitable for holding the substrates (40) during a cleaning and coating process;
wherein the system (48) is **characterized in that** it further comprises a cleaning device (10) having the features of claim 1.

11. Method (400) being suitable for cleaning multiple substrates (40) for spectacle lenses, the method comprising:
- mounting (402) the substrates (40) at mounting slots (36) on a calotte-shaped substrate holder (14), wherein the mounting slots (36) are arranged on the calotte-shaped substrate holder (14) in one or more rows (38) extending in a concentric manner around a central axis (100) of the calotte-shaped substrate holder (14);
wherein the method (400) further comprises the steps:
- arranging (404) an arc-shaped first cleaning arm (16) of a cleaning device (10) over or underneath the calotte-shaped substrate holder (14) such that the arc-shaped first cleaning arm (16) of the cleaning device (10) extends in an altitudinal direction (106) of the calotte-shaped substrate holder (14) over at least some of the rows (38) of mounting slots (36), wherein the first cleaning arm (16) has an arc-shape with a radius of curvature in the range from 0,5 m to 2 m and a length in an altitudinal direction (106) in the range from 0,5 m to 2 m.; and
- cleaning (406) the substrates (40) by ejecting a cleaning fluid through one or more ejection nozzles (18) provided at the first cleaning arm (16) onto the substrate holder (14) and sucking at least a part of the ejected cleaning fluid into one or more suction nozzles (20) provided at the first cleaning arm (16) and providing a rotational movement of the calotte-shaped substrate holder (14) in an azimuthal direction (102) around the central axis (100) with respect to the first cleaning arm (16).

12. Method (400) according to claim 11, wherein providing the rotational movement of the calotte-shaped substrate holder (14) in the azimuthal direction (102) around the central axis (100) with respect to the first cleaning arm (16) comprises rotating the calotte-shaped substrate holder (14) by at least 360° around the central axis (100).

13. Method (400) according to claim 11 or 12, wherein the arc-shaped first cleaning arm (16) of the cleaning device (10) is arranged over the calotte-shaped substrate holder (14) and wherein:
- the method (400) further comprises arranging an arc-shaped second cleaning arm (22) of the cleaning device (10) underneath the calotte-shaped substrate holder (14) such that the arc-shaped second cleaning arm (22) of the cleaning device (10) extends in the altitudinal direction (106) of the calotte-shaped substrate holder (14) over at least some of the rows (38) of mounting slots (36); and
- the step of cleaning (406) the substrates (40) further comprises ejecting a cleaning fluid through one or more ejection nozzles (18) provided at the second cleaning arm (22) onto the substrate holder (14) and sucking at least a part of the ejected cleaning fluid into one or more suction nozzles (20) provided at the second cleaning arm (22) and providing a rotational movement of the calotte-shaped substrate holder (14) in an azimuthal direction (102) around the central axis (100) with respect to the second cleaning arm (22).

14. Method (400) according to any one of the claims 11 to 13, further comprising moving at least one of the one or more ejection nozzles (18) along the altitudinal direction (106) while providing a rotational movement of the calotte-shaped substrate holder (14) in the azimuthal direction (102) around the central axis (100).

15. Method (400) according to any one of the claims 11 to 14, wherein
- the method (400) further comprises arranging the calotte-shaped substrate holder (14) in a coating device (32);
- the step of arranging (404) the arc-shaped first cleaning arm (16) of the cleaning device (10) over or underneath the calotte-shaped substrate holder (14) comprises arranging the cleaning device (10) adjacent to the coating device (32); and
- the method (400) further comprises removing the cleaning device (10) from the coating device (32) after cleaning the substrates (40).

16. Method (500) being suitable for manufacturing a spectacle lens from a substrate (40) for a spectacle lens, the method being **characterized in that** it includes a step of cleaning the substrate (40) for the spectacle lens using a method (400) according to any one of the claims 11 to 14.

## Patentansprüche

1. Reinigungsvorrichtung (10), die zur Reinigung von auf einem kalottenförmigen Substrathalter (14) gelagerten Substraten (40) für Brillengläser eingerichtet ist, wobei der kalottenförmige Substrathalter (14) in horizontale Richtung (102) um eine Mittelachse (100) des kalottenförmigen Substrathalters (14) drehbar ist,
wobei die Reinigungsvorrichtung (10) einen ersten Reinigungsarm (16) umfasst, wobei eine oder mehrere Ausströmdüsen (18) und eine oder mehrere Saugdüsen (20) am ersten Reinigungsarm (16) angeordnet sind;
**dadurch gekennzeichnet, dass**
der erste Reinigungsarm (16) bogenförmig ist und einen Krümmungsradius im Bereich von 0,5 m bis 2 m und eine Länge in Höhenrichtung (106) im Bereich von 0,5 m bis 2 m aufweist.

2. Reinigungsvorrichtung (10) nach Anspruch 1, wobei der erste Reinigungsarm (16) kreisbogenförmig ist.

3. Reinigungsvorrichtung (10) nach Anspruch 1 oder 2, wobei mindestens eine der einen oder mehreren Ausströmdüsen (18) in Höhenrichtung (106) entlang des ersten Reinigungsarms (16) beweglich ist.

4. Reinigungsvorrichtung (10) nach einem der vorstehenden Ansprüche, wobei die eine oder die mehreren Ausströmdüsen (18) in Bezug zum ersten Reinigungsarm (16) in Radialrichtung ausgerichtet sind.

5. Reinigungsvorrichtung (10) nach einem der vorstehenden Ansprüche, wobei die eine oder die mehreren Ausströmdüsen (18) mehrere Ausströmdüsen (18) umfassen, die am ersten Reinigungsarm (16) in Höhenrichtung (106) verteilt sind.

6. Reinigungsvorrichtung (10) nach einem der vorstehenden Ansprüche, ferner umfassend einen zweiten Reinigungsarm (22), wobei eine oder mehrere Ausströmdüsen (18) und eine oder mehrere Saugdüsen (20) am zweiten Reinigungsarm (22) angeordnet sind, wobei der zweite Reinigungsarm (22) bogenförmig ist und einen Krümmungsradius im Bereich von 0,5 m bis 2 m und eine Länge in Höhenrichtung (106) im Bereich von 0,5 m bis 2 m aufweist.

7. Reinigungsvorrichtung (10) nach Anspruch 6, wobei der erste Reinigungsarm (16) und der zweite Reinigungsarm (22) parallel zueinander angeordnet und in vertikale Richtung (104) voneinander beabstandet sind.

8. Reinigungsvorrichtung (10) nach Anspruch 7, wobei der vertikale Abstand zwischen dem ersten Reinigungsarm (16) und dem zweiten Reinigungsarm (22) im Bereich von 0,01 m bis 0,5 m liegt.

9. Reinigungsvorrichtung (10) nach einem der Ansprüche 6 bis 8, wobei die Ausströmdüsen (18) des ersten Reinigungsarms (16) und die Ausströmdüsen (18) des zweiten Reinigungsarms (22) zumindest teilweise aufeinander gerichtet sind.

10. System (48) zum Reinigen und Beschichten von Substraten (40), wobei das System (48) einen kalottenförmigen Substrathalter (14) umfasst, der zum Halten der Substrate (40) während eines Reinigungs- und Beschichtungsvorgangs geeignet ist;
wobei das System (48) **dadurch gekennzeichnet ist, dass** es ferner eine Reinigungsvorrichtung (10) mit den Eigenschaften von Anspruch 1 umfasst.

11. Verfahren (400), das zur Reinigung mehrerer Substrate (40) für Brillengläser geeignet ist, wobei das Verfahren Folgendes umfasst:
- Lagern (402) der Substrate (40) in Lagerungsaussparungen (36) an einem kalottenförmigen Substrathalter (14), wobei die Lagerungsaussparungen (36) in einer oder mehreren Reihen (38) am kalottenförmigen Substrathalter (14) angeordnet sind, die sich konzentrisch um eine Mittelachse (100) des kalottenförmigen Substrathalters (14) erstrecken;
wobei das Verfahren (400) ferner die folgenden Schritte umfasst:
- Anordnen (404) eines bogenförmigen ersten Reinigungsarms (16) einer Reinigungsvorrichtung (10) über oder unter dem kalottenförmigen Substrathalter (14), sodass sich der bogenförmige erste Reinigungsarm (16) der Reinigungsvorrichtung (10) in Höhenrichtung (106) des kalottenförmigen Substrathalters (14) über zumindest einige der Reihen (38) Lagerungsaussparungen (36) erstreckt, wobei der erste Reinigungsarm (16) bogenförmig ist und einen Krümmungsradius im Bereich von 0,5 m bis 2 m und eine Länge in Höhenrichtung (106) im Bereich von 0,5 m bis 2 m aufweist; und
- Reinigen (406) der Substrate (40) durch Ausströmen eines Reinigungsfluids durch eine oder mehrere am ersten Reinigungsarm (16) vorgesehene Ausströmdüsen (18) auf den Substrathalter (14) und Ansaugen zumindest eines Teils des ausgeströmten Reinigungsfluids in eine oder mehrere am ersten Reinigungsarm (16) vorgesehene Saugdüsen (20) und Vorsehen einer Drehbewegung des kalottenförmigen Substrathalters (14) in horizontale Richtung (102) um die Mittelachse (100) in Bezug zum ersten Reinigungsarm (16).

12. Verfahren (400) nach Anspruch 11, wobei das Vorsehen der Drehbewegung des kalottenförmigen Substrathalters (14) in horizontale Richtung (102) um die Mittelachse (100) in Bezug zum ersten Reinigungsarm (16) das Drehen des kalottenförmigen Substrathalters (14) um mindestens 360° um die Mittelachse (100) umfasst.

13. Verfahren (400) nach Anspruch 11 oder 12, wobei der bogenförmige erste Reinigungsarm (16) der Reinigungsvorrichtung (10) über dem kalottenförmigen Substrathalter (14) angeordnet ist und wobei:
- das Verfahren (400) ferner das Anordnen eines bogenförmigen zweiten Reinigungsarms (22) der Reinigungsvorrichtung (10) unter dem kalottenförmigen Substrathalter (14), sodass sich der bogenförmige zweite Reinigungsarm (22) der Reinigungsvorrichtung (10) in Höhenrichtung (106) des kalottenförmigen Substrathalters (14) über zumindest einige der Reihen (38) Lagerungsaussparungen (36) erstreckt, umfasst; und
- der Schritt des Reinigens (406) der Substrate (40) ferner das Ausströmen eines Reinigungsfluids durch eine oder mehrere am zweiten Reinigungsarm (22) vorgesehene Ausströmdüsen (18) auf den Substrathalter (14) und das Ansaugen zumindest eines Teils des ausgeströmten Reinigungsfluids in eine oder mehrere am zweiten Reinigungsarm (22) vorgesehene Saugdüsen (20) und das Vorsehen einer Drehbewegung des kalottenförmigen Substrathalters (14) in horizontale Richtung (102) um die Mittelachse (100) in Bezug zum zweiten Reinigungsarm (22) umfasst.

14. Verfahren (400) nach einem der Ansprüche 11 bis 13, ferner umfassend Bewegen mindestens einer der einen oder mehreren Ausströmdüsen (18) entlang der Höhenrichtung (106), während eine Drehbewegung des kalottenförmigen Substrathalters (14) in horizontale Richtung (102) um die Mittelachse (100) vorgesehen wird.

15. Verfahren (400) nach einem der Ansprüche 11 bis 14, wobei
- das Verfahren (400) ferner das Anordnen des kalottenförmigen Substrathalters (14) in einer Beschichtungsvorrichtung (32) umfasst;
- der Schritt des Anordnens (404) des bogenförmigen ersten Reinigungsarms (16) der Reinigungsvorrichtung (10) über oder unter dem kalottenförmigen Substrathalter (14) das Anordnen der Reinigungsvorrichtung (10) an die Beschichtungsvorrichtung (32) angrenzend umfasst und
- das Verfahren (400) ferner das Entfernen der Reinigungsvorrichtung (10) von der Beschichtungsvorrichtung (32) nach der Reinigung der Substrate (40) umfasst.

16. Verfahren (500), das zur Herstellung eines Brillenglases aus einem Substrat (40) für ein Brillenglas geeignet ist, wobei das Verfahren **dadurch gekennzeichnet ist, dass** es einen Schritt des Reinigens des Substrats (40) für das Brillenglas umfasst, bei dem ein Verfahren (400) nach einem der Ansprüche 11 bis 14 verwendet wird.

## Revendications

1. Dispositif de nettoyage (10) adapté au nettoyage de substrats (40) pour verres de lunettes montés sur un support de substrat en forme de cartouche (14), le support de substrat en forme de cartouche (14) étant rotatif dans un sens azimutal (102) autour d'un axe central (100) du support de substrat en forme de cartouche (14),
le dispositif de nettoyage (10) comprenant un premier bras de nettoyage (16) doté d'une ou plusieurs buses d'éjection (18) et d'une ou plusieurs buses d'aspiration (20) disposées sur le premier bras de nettoyage (16) ;
**caractérisé en ce que** le premier bras de nettoyage (16) a une forme d'arc avec un rayon de courbure compris entre 0,5 m et 2 m et une longueur dans le sens vertical (106) comprise entre 0,5 m et 2 m.

2. Dispositif de nettoyage (10) selon la revendication 1, dans lequel le premier bras de nettoyage (16) a une forme d'arc circulaire.

3. Dispositif de nettoyage (10) selon la revendication 1 ou 2, dans lequel au moins l'une de l'une ou plusieurs buses d'éjection (18) est mobile dans un sens vertical (106) le long du premier bras de nettoyage (16).

4. Dispositif de nettoyage (10) selon l'une quelconque des revendications précédentes, dans lequel l'une ou plusieurs buses d'éjection (18) sont dirigées dans un sens radial par rapport au premier bras de nettoyage (16).

5. Dispositif de nettoyage (10) selon l'une quelconque des revendications précédentes, dans lequel l'une ou plusieurs buses d'éjection (18) comprennent plusieurs buses d'éjection (18) réparties dans le sens vertical (106) sur le premier bras de nettoyage (16).

6. Dispositif de nettoyage (10) selon l'une quelconque des revendications précédentes, comprenant en outre un second bras de nettoyage (22) avec une ou plusieurs buses d'éjection (18) et une ou plusieurs buses d'aspiration (20) disposées sur le second bras de nettoyage (22), dans lequel le second bras de nettoyage (22) a une forme d'arc avec un rayon de courbure compris entre 0,5 m et 2 m et une longueur dans un sens vertical (106) comprise entre 0,5 m et 2 m.

7. Dispositif de nettoyage (10) selon la revendication 6, dans lequel le premier bras de nettoyage (16) et le second bras de nettoyage (22) sont disposés parallèlement l'un à l'autre et espacés l'un de l'autre dans un sens vertical (104).

8. Dispositif de nettoyage (10) selon la revendication 7, dans lequel l'espacement vertical entre le premier bras de nettoyage (16) et le second bras de nettoyage (22) est compris entre 0,01 m et 0,5 m.

9. Dispositif de nettoyage (10) selon l'une quelconque des revendications 6 à 8, dans lequel les buses d'éjection (18) du premier bras de nettoyage (16) et les buses d'éjection (18) du second bras de nettoyage (22) sont au moins partiellement dirigées l'une vers l'autre.

10. Système (48) de nettoyage et de revêtement de substrats (40), le système (48) comprenant un support de substrat en forme de cartouche (14) adapté pour maintenir les substrats (40) pendant un processus de nettoyage et de revêtement ;
le système (48) étant **caractérisé en ce qu'**il comprend en outre un dispositif de nettoyage (10) présentant les caractéristiques selon la revendication 1.

11. Procédé (400) adapté au nettoyage de plusieurs substrats (40) pour verres de lunettes, comprenant :
- le montage (402) des substrats (40) sur les fentes de montage (36) d'un support de substrat en forme de cartouche (14), les fentes de montage (36) étant disposées sur le support de substrat en forme de cartouche (14) en une ou plusieurs rangées (38) s'étendant de manière concentrique autour d'un axe central (100) du support de substrat en forme de cartouche (14) ;
le procédé (400) comprenant en outre les étapes suivantes :
- la disposition (404) d'un premier bras de nettoyage (16) en forme d'arc d'un dispositif de nettoyage (10) sur ou sous le support de substrat en forme de cartouche (14) de sorte que le premier bras de nettoyage (16) en forme d'arc du dispositif de nettoyage (10) s'étend dans un sens vertical (106) du support de substrat en forme de cartouche (14) sur au moins certaines des rangées (38) de fentes de montage (36), dans lequel le premier bras de nettoyage (16) a une forme d'arc avec un rayon de courbure compris entre 0,5 m et 2 m et une longueur dans le sens vertical (106) comprise entre 0,5 m et 2 m ; et
- le nettoyage (406) des substrats (40) en éjectant un liquide de nettoyage par une ou plusieurs buses d'éjection (18) situées sur le premier bras de nettoyage (16) sur le support de substrat (14) et en aspirant au moins une partie du liquide de nettoyage éjecté dans une ou plusieurs buses d'aspiration (20) situées sur le premier bras de nettoyage (16) et en exécutant un mouvement de rotation du support de substrat en forme de cartouche (14) dans un sens azimutal (102) autour de l'axe central (100) par rapport au premier bras de nettoyage (16).

12. Procédé (400) selon la revendication 11, dans lequel l'exécution du mouvement de rotation du support de substrat en forme de cartouche (14) dans le sens azimutal (102) autour de l'axe central (100) par rapport au premier bras de nettoyage (16) comprend la rotation du support de substrat en forme de cartouche (14) d'au moins 360° autour de l'axe central (100).

13. Procédé (400) selon la revendication 11 ou 12, dans lequel le premier bras de nettoyage en forme d'arc (16) du dispositif de nettoyage (10) est disposé sur le support de substrat en forme de cartouche (14) et dans lequel :
- le procédé (400) comprend en outre la disposition d'un second bras de nettoyage en forme d'arc (22) du dispositif de nettoyage (10) sous le support de substrat en forme de cartouche (14) de sorte que le second bras de nettoyage en forme d'arc (22) du dispositif de nettoyage (10) s'étend dans le sens vertical (106) du support de substrat en forme de cartouche (14) sur au moins certaines des rangées (38) de fentes de montage (36) ; et
- l'étape de nettoyage (406) des substrats (40) comprend en outre l'éjection d'un liquide de nettoyage par une ou plusieurs buses d'éjection (18) situées sur le second bras de nettoyage (22) sur le support de substrat (14) et l'aspiration d'au moins une partie du liquide de nettoyage éjecté dans une ou plusieurs buses d'aspiration (20) situées sur le second bras de nettoyage (22), ainsi que l'exécution d'un mouvement de rotation du support de substrat en forme de cartouche (14) dans un sens azimutal (102) autour de l'axe central (100) par rapport au second bras de nettoyage (22).

14. Procédé (400) selon l'une quelconque des revendications 11 à 13, comprenant en outre le déplacement d'au moins l'une de l'une ou plusieurs buses d'éjection (18) le long du sens vertical (106) tout en exécutant un mouvement de rotation du support de substrat en forme de cartouche (14) dans le sens azimutal (102) autour de l'axe central (100).

15. Procédé (400) selon l'une quelconque des revendications 11 à 14, dans lequel
- le procédé (400) comprend en outre la disposition du support de substrat en forme de cartouche (14) dans un dispositif de revêtement (32) ;
- l'étape de disposition (404) du premier bras de nettoyage en forme d'arc (16) du dispositif de nettoyage (10) sur ou sous le support de substrat en forme de cartouche (14) comprend la disposition du dispositif de nettoyage (10) à côté du dispositif de revêtement (32) ; et
- le procédé (400) comprend en outre le retrait du dispositif de nettoyage (10) du dispositif de revêtement (32) après le nettoyage des substrats (40).

16. Procédé (500) adapté à la fabrication d'un verre de lunettes à partir d'un substrat (40) pour verre de lunettes, le procédé étant **caractérisé en ce qu'**il comprend une étape de nettoyage du substrat (40) pour verre de lunettes à l'aide d'un procédé (400) selon l'une quelconque des revendications 11 à 14.
